# EUROPEAN PATENT APPLICATION

(11) **EP 4 804 382 A1**
(43) Date of publication of application: **09.09.2026**
(21) Application number: 26160403.7
(22) Date of filing: 24.02.2026
(51) Int. Cl.: H02K 1/16, H02K 3/12, H02K 3/28, H02K 3/34

(54) **STATOR OF ELECTRIC MOTOR**

(30) Priority: 07.03.2025 JP 2025036419
(71) Applicant: Toyota Jidosha Kabushiki Kaisha, Toyota-shi, Aichi-ken 471-8571 (JP)
(72) Inventor: INUZUKA, Kenta, Toyota-shi, 471-8571 (JP); ASAOKA, Hironori, Toyota-shi, 471-8571 (JP); USHIDA, Norihiro, Toyota-shi, 471-8571 (JP); KAWAKAMI, Jun, Toyota-shi, 471-8571 (JP); SUZUKI, Yasunori, Toyota-shi, 471-8571 (JP); HIRAYAMA, Masanobu, Toyota-shi, 471-8571 (JP); YAMATO, Fumiaki, Toyota-shi, 471-8571 (JP); WATANABE, Kohei, Toyota-shi, 471-8571 (JP)
(74) Representative: D Young & Co LLP

(57) **Abstract**

A stator (2) of an electric motor includes: a stator core (3) that includes teeth (4a; 4b; 4c); and a coil (10) that includes a plurality of turns wound around the teeth (4a; 4b; 4c). Windings of the coil (10) extend through a slot (5) between two adjacent teeth of the teeth (4a; 4b; 4c). A side surface (6) of at least one of the two adjacent teeth (4a; 4b; 4c), the side surface (6) facing the slot (5), is provided with a first protrusion (21) that separates first two adjacent turns of the turns.

## Description

### BACKGROUND OF THE INVENTION

### 1. Field of the Invention

The technique disclosed in the present specification relates to a stator of an electric motor.

### 2. Description of Related Art

A stator includes a stator core and a coil wound around teeth of the stator core. Each winding of the coil is called a turn. An insulator is disposed between turns so that adjacent turns are not electrically connected. For example, Japanese Unexamined Patent Application Publication No. 2021-126031 (JP 2021-126031 A) discloses a stator including a coil bobbin sandwiched between two adjacent teeth. The coil bobbin is made of an insulator and has a plurality of holes arranged in the radial direction of the stator core. A winding passes through each of the holes. The space between adjacent teeth is occasionally called a slot. The coil bobbin is disposed in the slot.

### SUMMARY OF THE INVENTION

High insulation can be achieved by increasing the thickness of walls between adjacent holes of the coil bobbin. However, thin windings must be used when the thickness of the walls of the coil bobbin is increased. In other words, the occupancy rate of the coil relative to the area of the slot at the time when the coil is viewed in the axial direction of the stator core reduces. The present specification provides a technique of ensuring the necessary insulation between turns of a coil while suppressing a reduction in the occupancy rate of the coil.

A first aspect of the present specification provides a stator of an electric motor, including: a stator core that includes teeth; and a coil that includes a plurality of turns wound around the teeth. Windings of the coil extend through a slot between two adjacent teeth of the teeth. A side surface of at least one of the two adjacent teeth, the side surface facing the slot, is provided with a first protrusion that separates first two adjacent turns of the turns. The first protrusion may separate two of the turns that are physically adjacent but not electrically adjacent.

Two turns that are physically adjacent may not be electrically adjacent, and conversely, two turns that are electrically adjacent may not be physically adjacent. For example, there is a case where the coil includes a plurality of coil segments having a U-shape, and the coil segments are fitted with the teeth. The tip of one arm of the U-shape of a coil segment is connected to the tip of the other arm of the U-shape of another coil segment. All of the coil segments are connected to constitute a coil. When two coil segments that are physically far apart are electrically connected, a first coil segment positioned next to a second coil segment is physically adjacent to the second coil segment but not electrically adjacent (two electrically connected coil segments are electrically adjacent but not physically adjacent). When a current flows through the coil, the potential difference between turns that are not electrically adjacent is greater than the potential difference between turns that are electrically adjacent.

In the stator disclosed in the present specification, a protrusion is provided on a side surface of a tooth (a side surface that faces turns) in order to separate two turns that are physically adjacent and not electrically adjacent. There is no need to provide a protrusion between two turns that are physically and electrically adjacent. When the thickness of the insulating layer between all of the turns within the slot is increased, the occupancy rate of the coil relative to the area of the slot reduces. In the technique disclosed in the present specification, by sandwiching a protrusion between two turns, the potential difference between which is great when a current flows, it is possible to ensure the necessary insulation between the turns of the coil while suppressing an increase in the cross-sectional area of the coil. That is, it is possible to ensure the necessary insulation between the turns of the coil while suppressing a reduction in the occupancy rate of the coil relative to the area of the slot.

When a current flows, the potential difference is the greatest between the starting end turn and the terminal end turn of the coil. Thus, in the stator according to the first aspect, a starting end turn and a terminal end turn of the coil may be physically adjacent to each other; and the first protrusion may separate the starting end turn and the terminal end turn. This makes it possible to increase the insulation between turns, the potential difference between which is the greatest when a current flows.

A side surface of a tooth may be provided with a plurality of protrusions. That is, in the stator according to the first aspect, the side surface of the at least one of the two adjacent teeth may be provided with a second protrusion that separates second two adjacent turns of the turns.

In the stator according to the first aspect, the coil may include a plurality of coil segments having a U-shape and fitted with the teeth. The coil segments may correspond to the turns respectively. One arm of the U-shape of a first coil segment of the coil segments may be electrically connected to another arm of a second coil segment that is not physically adjacent. At this time, the first protrusion may separate the first coil segment and a coil segment positioned adjacent to the first coil segment. Since the coil is formed by inserting the coil segments between the teeth, it is easy to insert the coil segments into the slot (space between the teeth) provided with the protrusion. A stator in which a side surface of a tooth is provided with a protrusion that separates two turns can be fabricated at a low cost.

Details of the technique disclosed in the present specification and further improvements will be described in the "DETAILED DESCRIPTION OF EMBODIMENTS" below.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a cross-sectional view of a stator according to an embodiment;
FIG. 2 is a front view of a segment;
FIG. 3 illustrates the electrical connection relationship among a plurality of turns (segments); and
FIG. 4 is a cross-sectional view of a stator according to a modification.

### DETAILED DESCRIPTION OF EMBODIMENTS

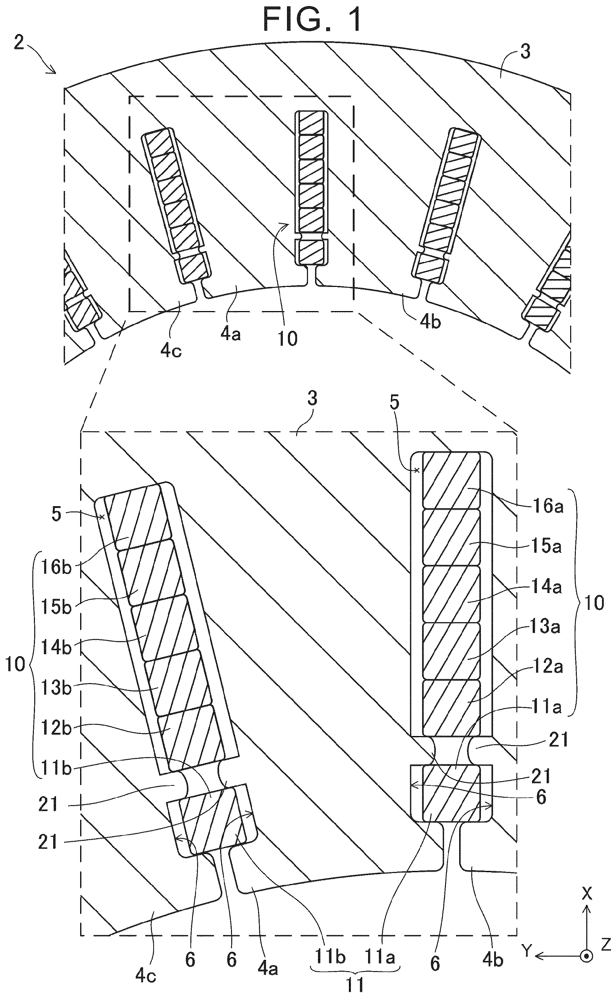

A stator 2 according to an embodiment will be described with reference to the drawings. FIG. 1 is a cross-sectional view of the stator 2. FIG. 1 is a cross-sectional view of the stator 2 in a cylindrical shape, the stator 2 being cut along a plane orthogonal to the axis of the stator 2. The Z axis of the coordinate system in the drawing is parallel to the axis of the stator 2, and the XY plane is orthogonal to the axis. In FIG. 1, only a part of the stator 2 is illustrated.

The stator 2 includes a stator core 3 and a coil 10. The stator core 3 has a cylindrical shape and is provided with a plurality of teeth 4a to 4c on the inner side. The teeth 4a to 4c are arranged along the inner periphery of the stator core 3 in a cylindrical shape. A coil is wound around every other one of the teeth. The coil 10 is wound around the tooth 4a. The lower part of FIG. 1 illustrates an enlarged view of the coil 10 wound around the tooth 4a.

The space between two adjacent teeth (for example, teeth 4a and 4b) is called a slot 5. The windings of the coil 10 pass through the slot 5. In other words, the windings of the coil 10 extend through the slot 5.

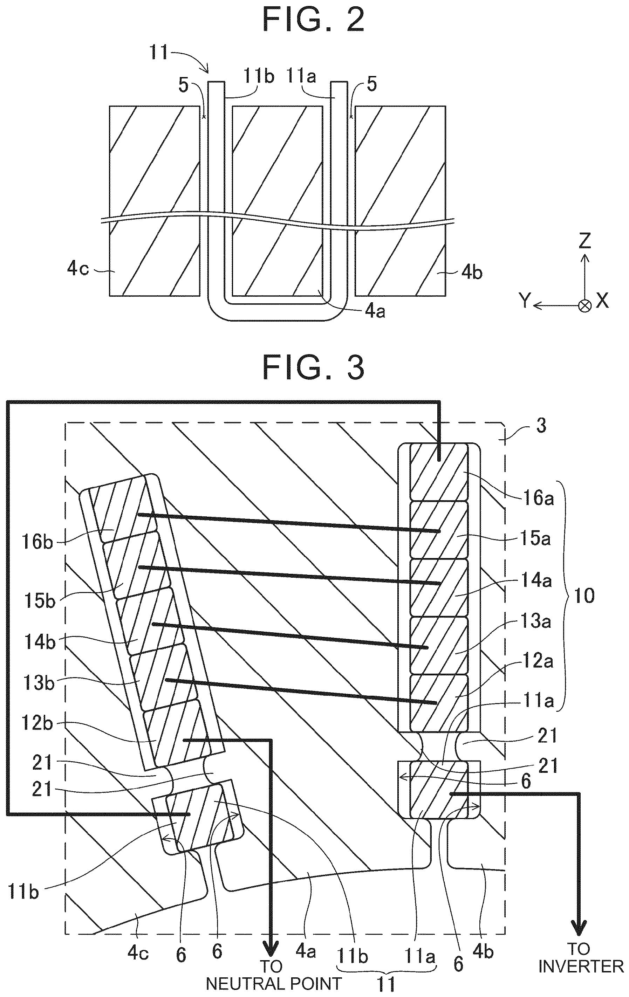

The coil 10 is made up of a plurality of coil segments in a U-shape. Hereinafter, for convenience of description, the "coil segments" will be simply referred to as "segments". FIG. 2 is a front view of one segment 11. FIG. 2 also illustrates a cross section of the teeth 4a to 4c. The segment 11 is made of a conductor (typically copper). The segment 11 is fitted with the tooth 4a. In other words, each arm of the segment 11 is inserted into the slot 5 on each side of the tooth 4a. For convenience of description, one arm of the U-shape of the segment 11 will be referred to as a right arm 11a, and the other arm will be referred to as a left arm 11b. The right arm 11a passes through one side of the tooth 4a, and the left arm 11b passes through the other side of the tooth 4a. A plurality of segments is fitted with one tooth 4a, and the tip of the right arm 11a of one segment 11 is electrically connected to the tip of the left arm 11b of another segment, and the tip of the left arm 11b of the segment 11 is electrically connected to the tip of the right arm of still another segment. In this way, the segments are electrically connected to constitute the coil 10 wound around the tooth 4a. Since one segment 11 surrounds the tooth 4a, one segment corresponds to one turn of the coil. Hereinafter, the "segment 11 (coil segment 11)" will also be referred to as a "turn 11".

Returning to the description of FIG. 1, in the stator 2 in FIG. 1, six segments 11 to 16 are fitted with one tooth 4a. In other words, six segments 11 to 16 fitted with one tooth 4a constitute one coil 10. As mentioned above, each of the six segments 11 to 16 corresponds to one turn. In FIG. 1, reference sign 11 is given to only the segment 11 (turn 11), and reference signs 12 to 16 of the remaining segments (turns) are not indicated. However, in FIG. 1, reference signs are given to the right and left arms of all of the turns. For example, a segment having a right arm 16a and a left arm 16b corresponds to a segment 16 (turn 16). The coil 10 has six turns (turns 11 to 16). The electrical connection relationship among the turns 11 to 16 (segments 11 to 16) will be described later.

The windings of the coil 10 are covered with an insulating layer, but the insulating layer is not illustrated. When a current flows through the coil 10, the potential difference between two specific turns (turns 11 and 12) that are physically adjacent is greater than the potential difference between the other two turns. Therefore, in the stator 2, protrusions 21 are provided on side surfaces 6 of the teeth 4a and 4b (4c). The side surfaces 6 of the teeth 4a and 4b (4c) face the slot 5. The protrusions 21 are inserted between the adjacent turns 11 and 12 to separate the two turns. The distance between the turns 11 and 12 is greater than the distance between the other two turns. The insulation between the turns 11 and 12 is higher than the insulation between the other two turns.

The protrusions extend over the entire length of the stator core 3 in the axial direction (Z-axis direction). Thus, inside the stator core 3, the distance between the turns 11 and 12 is constant over the entire length of the stator core 3 in the axial direction (Z-axis direction).

The protrusion 21 is provided only between the turns 11 and 12, and is not provided between any other two adjacent turns (for example, turns 12 and 13 or turns 15 and 16). By disposing the protrusions 21 only between the two turns (turns 11 and 12), the potential difference between which is greater than the others when a current flows, the stator 2 can ensure the necessary insulation between adjacent turns while suppressing a reduction in the coil occupancy rate relative to the cross-sectional area of the slot 5.

The electrical connection relationship among the turns 11 to 16 (segments 11 to 16) will be described. In FIG. 3, which is the same as the lower part of FIG. 1, the connections between turns (between segments) are indicated by bold lines. The "connection" means electrical connection. One end of the coil 10 is electrically connected to an inverter, and the other end is connected to a neutral point. For convenience of description, one end of the coil 10 will be referred to as a starting end, and the other end will be referred to as a terminal end. In the coil 10, the tip of the right arm 11a of the turn 11 is connected to the inverter, and the tip of the left arm 11b is connected to the tip of the right arm 16a of the turn 16. Hereinafter, for convenience of description, the "tip of the right arm (left arm) of the turn" will be simply referred to as the "right arm (left arm) of the turn". The left arm 16b of the turn 16 is connected to the right arm 15a of the turn 15, and the left arm 15b of the turn 15 is connected to the right arm 14a of the turn 14. The left arm 14b of the turn 14 is connected to the right arm 13a of the turn 13, and the left arm 13b of the turn 13 is connected to the right arm 12a of the turn 12. The left arm 12b of the turn 12 is connected to the neutral point. That is, the coil 10 is electrically connected in the order of the turn 11, the turn 16, the turn 15, the turn 14, the turn 13, and the turn 12. The turn 11 and the turn 16 are electrically adjacent to each other. Similarly, the turn 16 and the turn 15, the turn 15 and the turn 14, the turn 14 and the turn 13, and the turn 13 and the turn 12 are electrically adjacent to each other.

On the other hand, as can be seen from the drawing, the coil 10 is physically arranged in the order of the turn 11, the turn 12, the turn 13, the turn 14, the turn 15, and the turn 16. The turn 11 and the turn 12 are physically adjacent to each other. Similarly, the turn 12 and the turn 13, the turn 13 and the turn 14, the turn 14 and the turn 15, and the turn 15 and the turn 16 are physically adjacent to each other.

The turn 11 corresponds to the starting end of the coil 10, and the turn 12 corresponds to the terminal end. The turn 11 and the turn 12 are physically adjacent to each other but not electrically adjacent to each other. When a current flows through the coil 10, the potential difference between the turn 11 corresponding to the starting end and the turn 12 corresponding to the terminal end is much greater than the potential difference between the other adjacent turns. By increasing the distance between the turn 11 corresponding to the starting end and the turn 12 corresponding to the terminal end using the protrusions 21, the insulation between turns with a large potential difference can be made higher than the insulation between the other turns. That is, the stator 2 can ensure insulation according to the potential difference between adjacent turns.

The insulation between two turns that are electrically and physically adjacent is ensured by an insulating coating applied to the windings. There is a great potential difference between the turns 11 and 12, and sufficient insulation may not be ensured by the coating of the windings alone. By increasing the distance between the turns 11 and 12 using the protrusions 21, sufficient insulation can be ensured between the turns 11 and 12.

In the stator 2 according to the embodiment, the protrusions 21 widen the gap between a pair of turns (turn 11 and turn 12) that are physically adjacent but not electrically adjacent and the potential difference between which is the greatest when a current flows through the coil 10. This makes it possible to ensure the necessary insulation between the turns, the potential difference between which is the greatest when a current flows, while suppressing a reduction in the occupancy rate of the coil 10 relative to the area of the slot 5 when the coil 10 is viewed in the axial direction. The potential difference is the greatest when the turn 11 at the starting end of the coil 10 and the turn 12 at the terminal end are adjacent to each other.

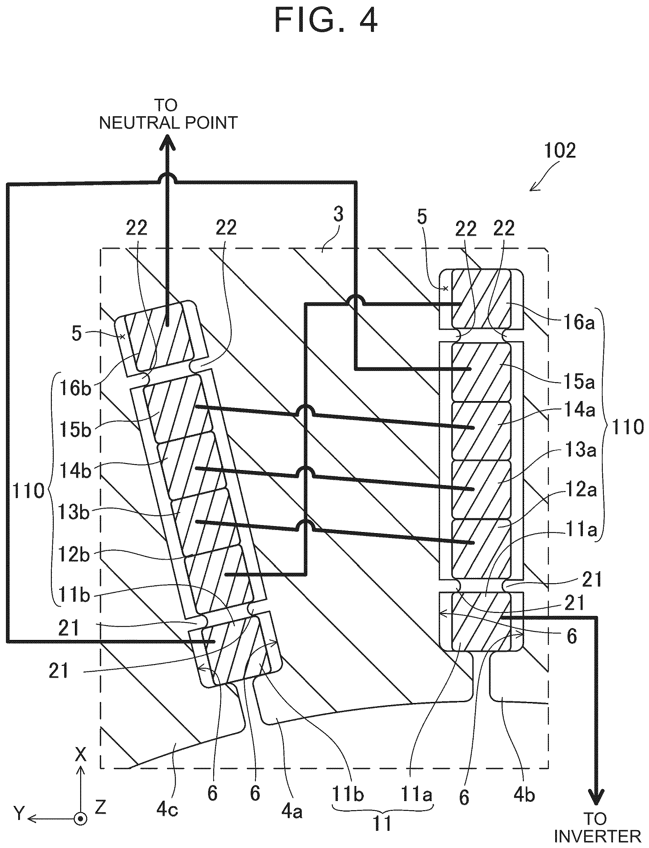

A stator 102 according to a modification will be described. FIG. 4 is a cross-sectional view of the stator 102. The stator 102 includes two protrusions 21 and 22 on the side surfaces 6 of the teeth 4a (4b, 4c). The protrusions 21 and 22 of the tooth 4a face the protrusions 21 and 22 of the adjacent tooth 4b (4c), respectively. The protrusions 21 of the teeth 4a and 4b are inserted between the two turns 11 and 12, increasing the distance between the two turns. The protrusions 22 of the teeth 4a and 4b are inserted between the two turns 15 and 16, increasing the distance between the two turns.

The bold lines in FIG. 4 indicate the electrical connection relationship of the turns 11 to 16 (coil segments 11 to 16). In the coil 110 of the stator 102, the turns 11 to 16 are arranged in this order, and the turns 11 and 12, the turns 12 and 13, the turns 13 and 14, the turns 14 and 15, and the turns 15 and 16 are physically adjacent to each other. However, as indicated by the bold lines in FIG. 4, the turns 11 and 12 are not electrically adjacent to each other. Moreover, the turns 15 and 16 are not electrically adjacent to each other.

In the stator 102, the protrusions 21 are inserted between the two turns 11 and 12 that are physically adjacent but not electrically adjacent, widening the gap between the two turns. In the stator 102, the protrusions 22 are inserted between the two turns 15 and 16 that are physically adjacent but not electrically adjacent, widening the gap between the two turns. In this way, a plurality of protrusions may be provided on the side surfaces 6 of the teeth according to the connection relationship of the turns. The protrusions are inserted between two adjacent turns, widening the gap between the two turns.

The technique disclosed in the present specification is not limited to the case where the potential difference between turns is the greatest when a current flows. When a current flows, the potential difference between turns that are physically adjacent and not electrically adjacent is greater than the potential difference between turns that are physically and electrically adjacent. Therefore, the feature of the technique disclosed in the present specification is that a protrusion is provided on a side surface of a tooth so as to be inserted between two turns that are physically adjacent and not electrically adjacent, and the protrusion widens the gap between the two turns. No protrusion is disposed between two turns that are physically and electrically adjacent.

Points to be noted regarding the technique described in the embodiment will be described. There are various ways to connect the coil segments. The electrical order of the turns on one side surface of one tooth may be different from the electrical order of the turns on the other side surface (such as when one turn is electrically connected to a turn wound around a physically adjacent tooth). Therefore, the position of a protrusion on one side surface of a tooth (the position in the radial direction of the stator core) may be different from the position of a protrusion on the other side surface. Alternatively, a protrusion may be provided on one side surface of a tooth and no protrusion may be provided on the other side surface.

An insulating sheet is occasionally disposed on the side surfaces of the teeth. In this case, the protrusions on the side surfaces of the teeth may curve the insulating sheet, causing the insulating sheet to be inserted between two adjacent turns and widen the gap between the two turns. In this case, the insulating sheet can also be considered to be a part of the teeth, and thus this case is also included in the expression "a protrusion that separates two adjacent turns is provided on a side surface of each of two adjacent teeth".

The protrusion is provided for the purpose of increasing the distance between two adjacent turns. It is only necessary that the protrusion should be provided on a side surface of at least one of two adjacent teeth as long as the distance between the two adjacent turns can be increased.

The side surfaces 6 of the teeth are, in other words, the side surfaces of the slots. That is, it is only necessary that the protrusion 21 (22) should be provided on at least one side surface of the slot 5 through which the winding of the coil 10 passes.

The coil 10 made up of a plurality of segments has the following features. The coil 10 includes a plurality of segments 11 to 16 (coil segments 11 to 16) having a U-shape and fitted with the tooth 4a. Each of the segments having a U-shape includes a right arm and a left arm, and right arms of all the segments pass through one side of the tooth 4a, and left arms pass through the other side of the tooth 4a. The tip of the right arm of one of the segments is electrically connected to the tip of the left arm of another segment, and the tip of the left arm is connected to the tip of the right arm of still another segment. In this way, the segments constitute the coil 10 wound around the tooth 4a. The tip of one arm (left arm 11b) of the U-shape of a specific segment (segment 11) is electrically connected to the tip of the other arm (right arm 16a) of another segment (segment 16) that is not physically adjacent.

One segment corresponds to one turn. A specific segment (segment 11) and another segment (segment 12) disposed adjacent to the specific segment correspond to two turns (turns 11 and 12) that are physically adjacent and not electrically adjacent. The protrusion 21 is provided on a side surface of a tooth so as to be positioned between such turns. The protrusion 21 widens the gap between the adjacent turns 11 and 12 to be greater than the gap between two turns that are physically and electrically adjacent.

It is preferable to fill the space widened by the protrusion 21 (22) with an insulating material. This further improves the insulation of the gap between the two turns widened by the protrusion 21 (22).

When a current flows through a coil, the potential difference between two turns that are physically adjacent but not electrically adjacent is greater than the potential difference between two turns that are physically and electrically adjacent. In the stator 2

(102) according to the embodiment, the protrusion 21 (22) is disposed between two turns that are physically adjacent but not electrically adjacent, and no protrusion is disposed between two turns that are physically and electrically adjacent. This feature makes it possible to ensure the necessary insulation between turns while suppressing a reduction in the occupancy rate of the coil relative to the area of the slot 5 when the coil is viewed in the axial direction.

The wording "two turns that are physically adjacent" means that one turn is positioned next to the other turn. The wording "two turns that are physically adjacent" may be rephrased as "two turns that are structurally adjacent". The wording "two turns that are electrically adjacent" means that an end of one turn is electrically connected to an end of the other turn. As illustrated in FIG. 3, the tip of the left arm 11b of the turn 11 is electrically connected to the tip of the right arm 16a of the turn 16 by an electric cable. At this time, the turns 11 and 16 are electrically adjacent to each other. Other turns (turns 12 to 15) are positioned between the turns 11 and 16, and the turns 11 and 16 are not physically adjacent to each other.

Although specific examples of the present invention have been described in detail above, these are only illustrative, and are not intended to limit the scope of the claims. The technique set forth in the claims includes various modifications and alterations of the specific examples given above. The technical elements indicated in the present specification or drawings exhibit technical utility either alone or in various combinations, and are not limited to the combinations set forth in the claims as originally filed. Furthermore, the technique indicated in the present specification or drawings can achieve a plurality of objects at the same time, and achieving one of these objects itself has technical utility.

## Claims

1. A stator (2) of an electric motor, comprising:
a stator core (3) that includes teeth (4a; 4b; 4c); and
a coil (10) that includes a plurality of turns wound around the teeth (4a; 4b; 4c), wherein:
windings of the coil (10) extend through a slot (5) between two adjacent teeth of the teeth (4a; 4b; 4c); and
a side surface (6) of at least one of the two adjacent teeth (4a; 4b; 4c), the side surface (6) facing the slot (5), is provided with a first protrusion (21) that separates first two adjacent turns of the turns.

2. The stator (2) according to claim 1, wherein the first protrusion (21) separates two of the turns that are physically adjacent and not electrically adjacent.

3. The stator (2) according to claim 2, wherein:
a starting end turn and a terminal end turn of the coil (10) are physically adjacent to each other; and
the first protrusion (21) separates the starting end turn and the terminal end turn.

4. The stator (2) according to claim 1, wherein the side surface (6) of the at least one of the two adjacent teeth (4a; 4b; 4c) is provided with a second protrusion (22) that separates second two adjacent turns of the turns.

5. The stator (2) according to any one of claims 1 to 4, wherein:
the coil (10) includes a plurality of coil segments having a U-shape and fitted with the teeth (4a; 4b; 4c);
the coil segments correspond to the turns respectively;
one arm (11a) of the U-shape of a first coil segment of the coil segments is electrically connected to another arm (11b) of a second coil segment that is not physically adjacent; and
the first protrusion (21) separates the first coil segment and a coil segment positioned adjacent to the first coil segment.

6. The stator (2) according to claim 1, wherein the first protrusion (21) projects toward the slot (5).

7. The stator (2) according to claim 4, wherein the second protrusion (22) projects toward the slot (5).
